# EUROPÄISCHE PATENTSCHRIFT

(11) **EP 2 250 420 B1**
(45) Veröffentlichungstag und Bekanntmachung des Hinweises auf die Patenterteilung: **19.06.2013**
(21) Anmeldenummer: 09716960.1
(22) Anmeldetag: 24.02.2009
(51) Int. Cl.: F16L 33/08

(54) **Schellenfixierung für ein Schlauchende**
Fixation of a clamp for a hose end
Fixation d'un collier de serrage pour une extrémité de tuyau souple

(30) Priorität: 07.03.2008 DE 102008013207
(43) Veröffentlichungstag der Anmeldung: 17.11.2010
(73) Patentinhaber: VERITAS AG, 63571 Gelnhausen (DE)
(72) Erfinder: CÖL, Isa, 60385 Frankfurt (DE)
(74) Vertreter: Klinski, Robert
(86) Internationale Anmeldenummer: PCT/EP2009/052162
(87) Internationale Veröffentlichungsnummer: WO 2009/109484

(56) Entgegenhaltungen:
- EP-A- 1 912 007
- EP-A- 2 017 518
- WO-A-2008/022853
- DE-A1- 10 324 236
- DE-U1-202005 011 542
- US-A- 3 407 448
- US-A- 3 454 996
- US-A- 3 477 106

## Beschreibung

Die Erfindung betrifft eine Schellenfixierung für ein Schlauchende nach dem Oberbegriff des Patentanspruchs 1.

Schlauchschellen dienen als Haltevorrichtungen für Schlauchenden, die auf den Umfang eines Schlauches angebracht werden, um das Schlauchende mit einem Rohrstutzen zu verbinden, über den der Schlauch zuvor gestülpt worden ist. Damit sich die Schlauchschellen nicht von dem Schlauchende lösen, werden häufig zusätzliche Halteelemente an der Schlauchschelle angebracht.

Bekannt ist eine Haltevorrichtung für ein Schlauchende, das eine Schlauchschelle enthält, die an wenigstens einer Stelle einen quer zum Umfang des Schlauchendes verlaufenden Verklemmungsteil aufweist, der in die Innenseite des Schlauchendes eingreift (DE 103 24 236 A1).

Weiterhin ist eine Schellenfixierung bekannt, bei der eine Schelle mit einem Halteelement verbunden ist (US 3 454 996; US 3 477 106). Das Haltelement ist mit der Unterseite der Schelle verbunden und weist Eingreifelemente auf, mit denen es mit dem Schlauchende verbindbar ist, so dass die Schelle an einem bestimmten Ort des Schlauchs fest angeordnet werden kann.

Ferner ist eine Schlauchschelle bekannt, mit einem Schellenband, einer Spanneinrichtung und einer Positionieranordnung, die mindestens einen Positionierer mit einer Basis und einer Kralle, die in eine Schlauchwand eindrückbar ist, aufweist (DE 10 2006 048 344 A1 bzw. EP 1 912 007 A2). Die Kralle weist einen von der Basis in eine Eindrückrichtung nach innen vorstehenden Abschnitt auf, wobei die Kralle ein Ende besitzt, das mit dem Abschnitt einen stumpfen Winkel einschließt.

Des Weiteren ist eine gattungsgemäße Schellenfixierung bekannt, die ein Halteelement umfasst, das eine Auflagefläche für eine Schlauchschelle aufweist (US 3,407,44. An dieser Auflagerfläche sind jeweils zwei gegenüberliegende Schenkel zum Umfassen der Schlauchschelle vorgesehen. Die Auflagefläche weist ferner zwei nebeneinander angeordnete Eingreifelemente auf, die in ein Schlauchende eingreifen können. um so das Halteelement an dem Schlauch zu befestigen.

Schließlich ist noch eine Schlauchschelle mit einem Schellenband, einer Spanneinrichtung sowie einer Positionieranordnung bekannt (EP 2 017 518 A1). Die Positionieranordnung weist mindestens einen Positionierer mit einer Basis auf. An dem Positionierer sind mehrere Schenkel zum Umfassen der Schlauchschelle vorgesehen. Damit der Positionierer an einem Schlauch befestigt werden kann, weist die Basis zwei Krallen auf, die in eine Schlauchwand des Schlauchs eindrückbar sind.

Aufgabe der vorliegenden Erfindung ist es, eine Schellenfixierung für eine Schlauchschelle bereitzustellen, welche derart ausgebildet ist, dass ein Verrutschen der an einem Schlauch angeordneten Schlauchschelle nicht möglich ist.

Diese Aufgabe wird durch die Merkmale des Anspruchs 1 gelöst.

Die Erfindung betrifft somit eine Schellenfixierung für ein Schlauchende, bestehend aus einer Schlauchschelle und mindestens einem Halteelement. Das Halteelement weist einen im Wesentlichen U-förmigen Abschnitt auf, in dem die Schlauchschelle gelagert ist. An diesem U-förmigen Abschnitt ist ein Verlängerungsabschnitt angeordnet, der mindestens ein Eingreifelement aufweist. Dieses zumindest eine Eingreifelement besitzt an seinem Ende scharfe Kanten. Auch können die Enden spitz ausgebildet sein. Wird die Schellenfixierung an einem Schlauch angebracht, so dringen die Eingreifelemente mittels dieser Enden in den Schlauch ein. Ein Verrutschen der so an dem Schlauch angebrachten Schellenfixierung ist damit nicht mehr möglich.

Ausführungsbeispiele der Erfindung sind in den Zeichnungen dargestellt und im Folgenden näher beschrieben. Es zeigen:
- Fig. 1: eine Schellenfixierung ohne Schlauch;
- Fig. 2: die in Fig. 1 dargestellte Schellenfixierung in einer anderen Position;
- Fig. 3a: ein Halteelement der in Fig. 1 und 2 dargestellten Schellenfixierung ohne Schlauchschelle;
- Fig. 3b: das in Fig. 3a gezeigte Halteelement in einer anderen Funktion;
- Fig. 3c: einen Schnitt durch das in den Fig. 3a, 3b dargestellte Halteelement;
- Fig. 4: eine zweite Variante eines Halteelements;
- Fig. 5: eine dritte Variante eines Halteelements;
- Fig. 6: eine vierte Variante eines Halteelements;
- Fig. 7: eine fünfte Variante eines Halteelements;
- Fig. 8a: eine sechste Variante eines Halteelements in einer perspektivischen Draufsicht;
- Fig. 8b: die Variante der Fig. 8a in einer perspektivischen Ansicht von unten;
- Fig. 8c: die Variante der Fig. 8a in einer Schmalseiten-Ansicht;
- Fig. 9: die Schellenfixierung gemäß Fig. 1 nach der Montage an einem Schlauch;
- Fig. 10: die geschnittene Schellenfixierung nach Fig. 9 nach der Montage an dem Schlauch.

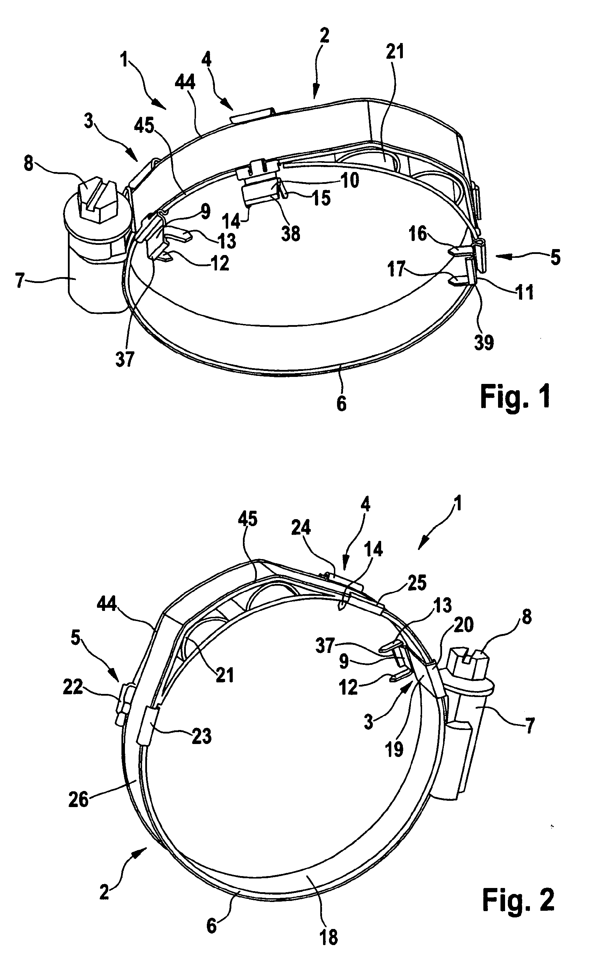

Bei den Figuren 1 bis 7, 9 und 10 sowie der dazugehörigen Figurenbeschreibung handelt es sich um Beispiele, die zum besseren Verständnis der Erfindung beitragen.

In Fig. 1 ist eine Schellenfixierung 1, bestehend aus einer Schlauchschelle 2 sowie Halteelementen 3 bis 5, zu sehen. Die Schlauchschelle 2 ist ein gekrümmtes Band 6 mit integrierter Federeinlage 21. Die Schlauchschelle 2 weist ein Schraubengehäuse 7 mit einer Schraube 8 auf. Mit dieser Schraube 8 kann der Umfang des Bands 6 verändert werden. Zu erkennen sind auch Erhebungen 44, 45, die im Randbereich des Bands 6 angeordnet sind. Die Schellenfixierung 1 besteht dabei aus einem korrosionsbeständigen Material, zum Beispiel Edelstahl.

Die Halteelemente 3 bis 5 weisen plattenförmige Verlängerungsabschnitte 9 bis 11 auf. Diese Verlängerungsabschnitte 9 bis 11 sind an ihren Enden 37 bis 39 umgebogen, so dass diese Enden 37 bis 39 einen Endabschnitt eines Schlauchs zumindest teilweise umgreifen können. Ein solches umgebogenes Ende ist beispielsweise aus US 3 454 996 oder DE 103 24 236 A1 bekannt. Auch ist es möglich, dass die gebogenen Enden 37 bis 39 Eingreifelemente aufweisen, wie dies aus US 3,454,996 bekannt ist. Diese Eingreifelemente greifen zusätzlich in den Endabschnitt des Schlauchs ein. Ein Schlauch ist in Fig. 1 jedoch nicht dargestellt.

An diesen Verlängerungsabschnitten 9 bis 11 sind jeweils zwei Eingreifelemente 12 bis 17 angeordnet. Wie in Fig. 1 zu sehen, verlaufen diese Eingreifelemente 12 bis 17 an ihrem Ende spitz zu. Es ist aber auch möglich, dass die Eingreifelemente 12 bis 17 an ihren Enden scharfe Kanten aufweisen.

Obwohl die Halteelemente 3 bis 5 in Fig. 1 zwei Eingreifelemente 12 bis 17 aufweisen, kann ein Halteelement auch nur über ein Eingreifelement oder aber auch mehr als nur zwei Eingreifelemente verfügen.

In Fig. 2 ist die in Fig. 1 dargestellte Schellenfixierung 1 nach einer Drehung gezeigt. Zu sehen sind wiederum die an der Schlauchschelle 2 angeordneten Halteelemente 3 bis 5. Dabei ist das Halteelement 3 an der Innenseite 18 der Schlauchschelle 2 angeordnet. Die Schlauchschelle 2 liegt auf einer Auflagefläche eines Verbindungsstücks 19 des Halteelements 3. Das Verbindungsstück 19 ist zwischen zwei senkrecht auf der Auflagefläche stehenden Schenkeln angeordnet, wobei in Fig. 2 nur der Schenkel 20 zu erkennen ist. Die Schenkel und die Auflagefläche bilden somit einen im Wesentlichen U-förmigen Abschnitt des Halteelements 3. Die beiden anderen Halteelemente 4, 5 sind zu beiden Seiten der integrierten Federeinlage 21 angeordnet. Auch diese Halteelemente 4 und 5 weisen jeweils zwei Schenkel 22, 23; 24, 25 eines im Wesentlichen U-förmigen Abschnitts auf.

Die Schenkel 22, 23; 24, 25 der Halteelemente 4, 5 liegen einander gegenüber. Obwohl in Fig. 2 die Schellenfixierung 1 aus Halteelementen 3 bis 5 und einer Schlauchschelle 2 mit einer integrierten Federeinlage 21 besteht, ist für den Fachmann klar, dass für eine solche Schellenfixierung auch andere Schlauchschellen verwendet werden können.

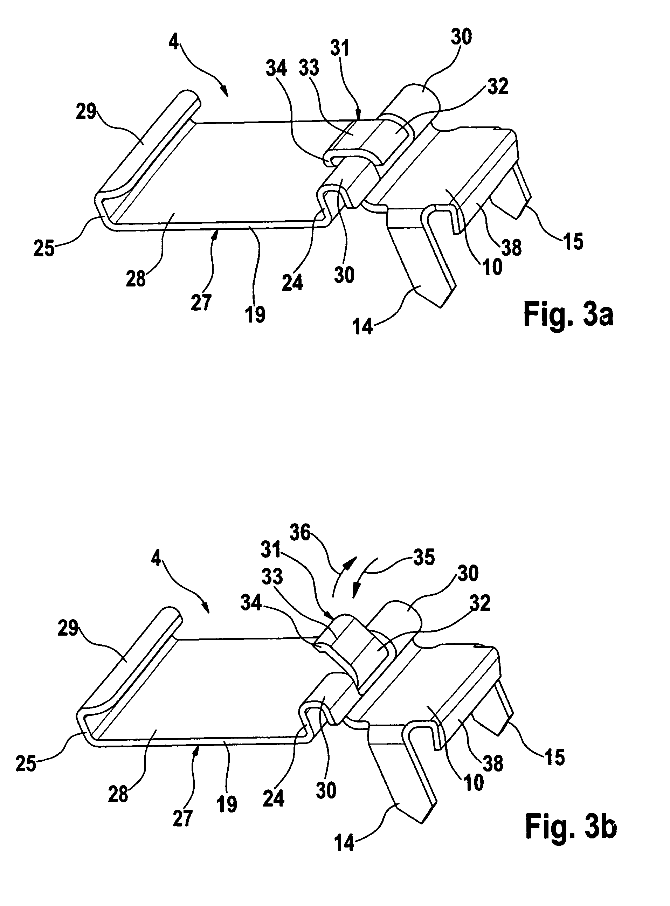

In Fig. 3a ist das in Fig. 1 und 2 dargestellte Halteelement 4 ohne Schlauchschelle gezeigt. Dieses Halteelement 4 weist einen im Wesentlichen U-förmigen Abschnitt 27 mit den zwei einander gegenüber liegenden Schenkeln 24, 25 auf. Die beiden Schenkel 24, 25 sind über das Verbindungsstück 19 miteinander verbunden. Mit 28 ist hierbei die Auflagefläche für eine Schlauchschelle bezeichnet. Die beiden Schenkel 24, 25 weisen U- bzw. L-förmig gebogene Enden 29, 30 auf. Dabei ist das Ende 29 des Schenkels 25 derart geformt, dass es zumindest teilweise die Auflagefläche 28 überdeckt, und zwar parallel zu dieser.

Das Ende 30 des Schenkels 24 des im Wesentlichen U-förmigen Abschnitts 27 ist ebenfalls gebogen. Es überdeckt jedoch nicht die Auflagefläche 28, sondern verbindet den Verlängerungsabschnitt 10 mit dem im Wesentlichen U-förmigen Abschnitt 27.

Damit kann der Verlängerungsabschnitt 10 als eine Verlängerung der Auflagefläche 28 angesehen werden, wobei die Auflagefläche 28 mit dem Verlängerungsabschnitt 10 über das Ende 30 des Schenkels 24 verbunden ist.

Wie in Fig. 3a zu sehen, ist das Ende 30 in der Mitte unterbrochen. Dort ist ein bewegliches Einrastelement 31 angeordnet. Dieses Einrastelement 31 ist mit einem Abschnitt 32 an dem gebogenen Ende 30 des Schenkels 24 beweglich angeordnet. Das Einrastelement 31 weist ein freies Ende 33 auf, das die Auflagefläche 28 in einem Abstand zumindest teilweise überdeckt. Am freien Ende 33 ist dabei ein Endabschnitt 34 angeordnet, der zur Auflagefläche 28 hin gebogen ist, so dass der Endabschnitt 34 des freien Endes 33 in Richtung auf die Auflagefläche 28 ausgerichtet ist.

Fig. 3b zeigt eine Ansicht des in Fig. 3a gezeigten Halteelements 4, wobei das Einrastelement 31 in Richtung des Pfeils 36 bewegt worden ist. Hierdurch ist das freie Ende 33 nicht mehr parallel zur Auflagefläche 28 ausgerichtet. Somit kann eine hier nicht dargestellte Schlauchschelle in den U-förmigen Abschnitt 27 des Halteelements 4 eingebracht werden, wobei darauf zu achten ist, dass die Schlauchschelle mit ihrer Innenseite auf der Auflagefläche 28 aufliegt. Anschließend kann das Einrastelement 31 in Richtung des Pfeils 35 bewegt werden, bis es einrastet. Damit ist das Halteelement 4 fest mit der Schlauchschelle verbunden.

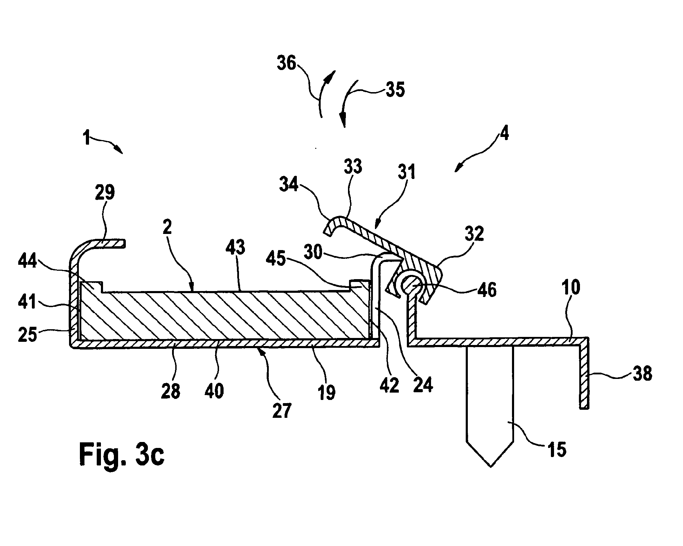

Fig. 3c zeigt einen Schnitt durch die in Fig. 1 dargestellte Schellenfixierung 1 bzw. einen Schnitt durch die Schellenfixierung gemäß Fig. 3b, wobei in dem U-förmigen Abschnitt 27 die Schlauchschelle 2 angeordnet ist. Wie in Fig. 3c zu erkennen, weist die Schlauchschelle 2 an den Seitenrändern 41, 42 Erhebungen 44, 45 auf. Die Schlauchschelle 2 liegt dabei mit ihrer Innenseite 40 auf der Auflagefläche 28 des U-förmigen Abschnitts 27 des Halteelements 4 auf.

Die Schenkel 24, 25 des U-förmigen Abschnitts 27 umgeben die Seitenränder 41, 42 mit den daran angeordneten Erhebungen 44, 45. Zudem überdeckt das Ende 29 des Schenkels 25 in einem Abstand die Erhebung 44 sowie die Oberseite 43 der Schlauchschelle 2 zumindest teilweise.

Das Einrastelement 31 ist auf einem an dem Verlängerungsabschnitt 10 angeordneten Element 46 beweglich angeordnet. Das Element 46, das - wie in Fig. 3c dargestellt - kugel- bzw. zylinderförmig ausgebildet ist, ist in dem Abschnitt 32 des Einrastelements 31 angeordnet. Das Element 46 kann auch andere Formen aufweisen, solange gewährleistet ist, dass das Einrastelement 31 beweglich an diesem Element 46 angeordnet ist. Das Element 46 weist zudem ein hier nicht dargestelltes Mittel auf, z. B. ein Federelement, das gewährleistet, dass das Einrastelement 31 bei der Bewegung in Richtung des Pfeils 35 bzw. in Richtung des Pfeils 36 bei Erreichen einer vorher festgelegten Position einrastet.

Wird das Einrastelement 31 in Richtung des Pfeils 35 bewegt, so erreicht es schließlich eine untere Einrastposition. Diese Einrastposition zeichnet sich vorzugsweise dadurch aus, dass das freie Ende 33 in dieser Einrastposition parallel zu der Auflagefläche 28 und somit auch parallel zur Oberseite 43 der Schlauchschelle 2 angeordnet ist. Da in dieser Einrastposition sowohl das Ende 29 des Schenkels 25 als auch das freie Ende 33 des Einrastelements 31 die Oberseite 43 der Schlauchschelle 2 zumindest teilweise überdecken, ist die Schlauchschelle 2 fest in dem U-förmigen Abschnitt 27 angeordnet.

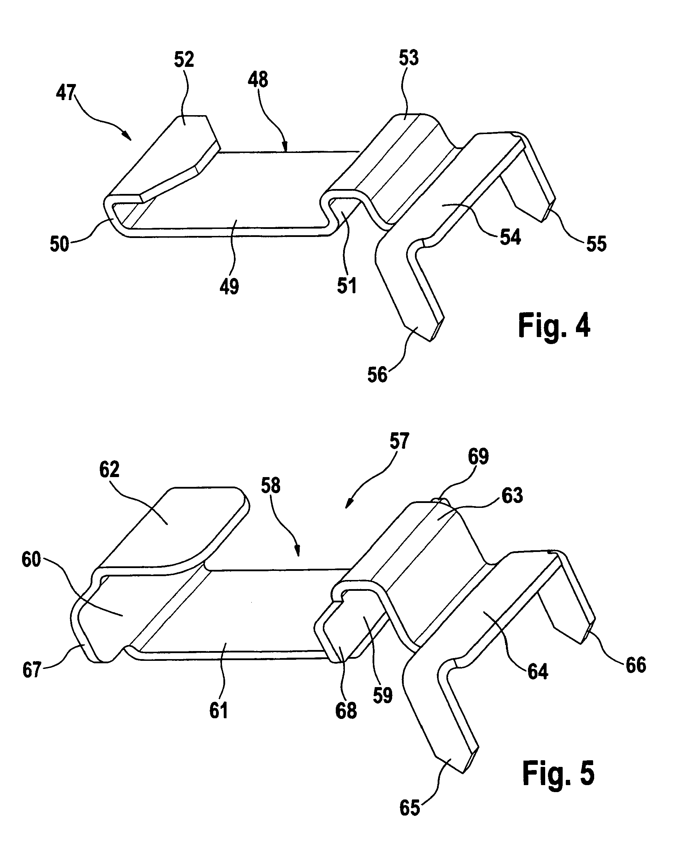

Fig. 4 zeigt eine zweite Variante eines Halteelements 47. Dieses Halteelement 47 weist wiederum einen im Wesentlichen U-förmigen Abschnitt 48 mit einer Auflagefläche 49 und zwei Schenkeln 50, 51 auf. An den beiden Schenkeln 50, 51 ist jeweils ein gebogenes Ende 52, 53 angeordnet, wobei das Ende 52 trapezförmig ausgebildet ist. Das Ende 53 verbindet den U-förmigen Abschnitt 48 mit einem Verlängerungsabschnitt 54, der zwei Eingreifelemente 55, 56 aufweist. Wie in Fig. 4 zu erkennen, ist das Ende 53 nicht unterbrochen. Ein Einrastelement ist somit bei diesem Halteelement 47 nicht vorgesehen, womit diese Variante des Halteelements 47 gegenüber dem Halteelement 4 einfacher aufgebaut ist.

Fig. 5 zeigt eine dritte Variante eines Halteelements 57. Auch dieses Halteelement 57 weist einen im Wesentlichen U-förmigen Abschnitt 58 auf, der zwei Schenkel 59, 60 mit einer zwischen den Schenkeln 59, 60 angeordneten Auflagefläche 61 aufweist. Die beiden Schenkel 59, 60 sind mit Enden 62, 63 versehen, die ebenfalls gebogen sind. Dabei ist das Ende 62 parallel und in einem Abstand zur Auflagefläche 61 angeordnet. Das Ende 63 verbindet einen Verlängerungsabschnitt 64 mit dem U-förmigen Abschnitt 58.

Wie auch bei den anderen Halteelementen 4 und 47 sind an dem Verlängerungsabschnitt 64 zwei Eingreifelemente 65, 66 angeordnet. Die beiden Schenkeln 59, 60 weisen zudem Flügel auf, wodurch die Schenkel 59, 60 zu ihren Seiten hin verlängert sind. In Fig. 5 sind lediglich die Flügel 67 bis 69 zu sehen.

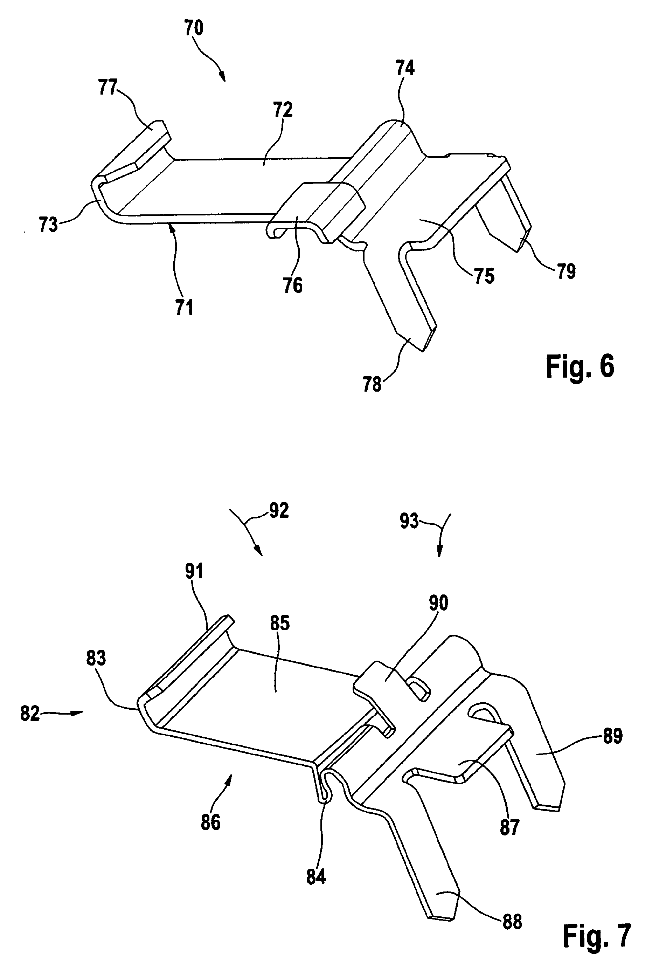

Fig. 6 zeigt eine weitere Variante eines Halteelements 70. Dieses Halteelement 70 weist einen im Wesentlichen U-förmigen Abschnitt 71 auf, bestehend aus einer Auflagefläche 72 und zwei daran angeordneten Schenkeln, wobei nur der Schenkel 73 vollständig zu erkennen ist. Es ist allerdings das Ende 74 des dem Schenkel 73 gegenüberliegenden Schenkels zu sehen, das den U-förmigen Abschnitt 71 mit einem Verlängerungsabschnitt 75 verbindet. Dabei ist die Auflagefläche 72 gegenüber dem Verlängerungsabschnitt 75 schmaler.

An dem Verlängerungsabschnitt 75 ist ein parallel zu der Auflagefläche 72 verlaufendes Element 76 zu erkennen, welches gegenüber der Auflagefläche 72 versetzt angeordnet ist, so dass es nicht oberhalb dieser Auflagefläche 72 angeordnet ist. Ist jedoch eine Schlauchschelle in dem U-förmigen Abschnitt 71 angeordnet, so überdeckt das Element 76 die Schlauchschelle zumindest teilweise. Dieses Element 76 kann entweder fest oder auch als ein bewegliches Einrastelement an dem Verlängerungsabschnitt 75 angeordnet sein. Eine Schlauchschelle ist in Fig. 6 jedoch nicht abgebildet.

Es versteht sich, dass auch der Schenkel 73 ein Ende 77 aufweisen kann, das entweder fest oder als ein bewegliches Einrastelement an diesem Schenkel 73 angeordnet ist.

Wie bei den anderen Halteelementen 3 bis 5, 47, 57 sind auch bei diesem Halteelement 70 an dem Verlängerungsabschnitt 75 zwei Eingreifelemente 78, 79 vorgesehen.

In Fig. 7 ist eine fünfte Variante eines Halteelements 82 dargestellt. Das Halteelement 82 weist zwei gegenüberliegende Schenkel 83, 84 auf, die über eine Auflagefläche 85 für eine Schelle miteinander verbunden sind. Eine Schelle ist in Fig. 7 jedoch nicht dargestellt. Die beiden Schenkel 83, 84 sowie die Auflagefläche 85 bilden dabei einen im Wesentlichen U-förmigen Abschnitt 86. Die Auflagefläche 85 ist über den Schenkel 84 mit einem Verlängerungsabschnitt 87 verbunden.

Benachbart zum Verlängerungsabschnitt 87 sind zwei Eingreifelemente 88, 89 angeordnet. Damit sind die Eingreifelemente 88, 89 direkt mit dem Schenkel 84 und nicht, wie dies bei den anderen Varianten 3 bis 5, 47, 57, 70 der Fall ist, mit dem Verlängerungsabschnitt 87 verbunden. Obwohl in Fig. 7 nicht dargestellt, kann der Verlängerungsabschnitt 87 ein gebogenes Ende aufweisen, das das Ende eines Schlauchs zumindest teilweise umgeben kann und wie es zum Beispiel die Varianten 3 und 5 besitzen.

Zu erkennen ist auch eine an dem Schenkel 84 angewinkelte Nase 90. Auch der Schenkel 83 weist eine solche angewinkelte Nase 91 auf. Diese Nasen 90, 91 können, nachdem in den im Wesentlichen U-förmigen Abschnitt 86 eine Schlauchschelle eingebracht wurde, in Richtung der Pfeile 92 bzw. 93, d. h. in Richtung der Auflagefläche 85 und somit in Richtung der auf der Auflagefläche aufliegenden Schelle, bewegt werden. Dadurch wird die in dem U-förmigen Abschnitt 86 angeordnete Schelle fixiert.

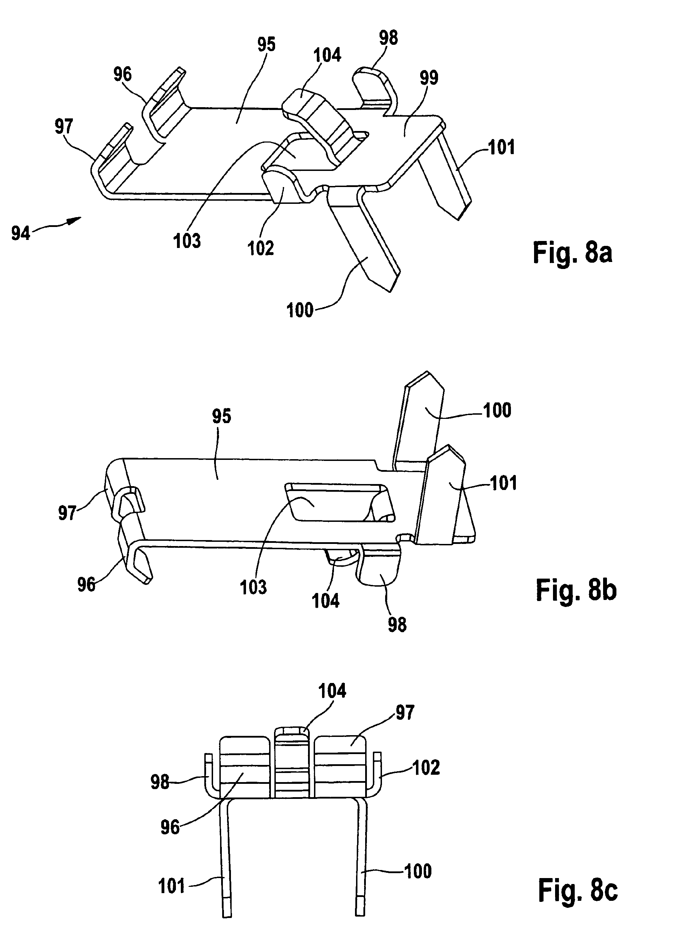

Fig. 8a zeigt eine weitere Variante eines Halteelements 94, das wiederum eine Auflagefläche 95 für eine Schelle aufweist. Eine Schelle ist in Fig. 8a jedoch nicht dargestellt. An der Auflagefläche 95 sind zwei benachbarte und voneinander beabstandete Schenkel 96, 97 angeordnet. An der den Schenkeln 96, 97 gegenüber liegenden Seite schließt sich an die Auflagefläche 95 ein Verlängerungsabschnitt 99 an, an dem zwei Eingreifelemente 100, 101 angeordnet sind, die in das Ende eines Schlauchs eingreifen können. Ein Schlauch ist in Fig. 8a nicht gezeigt. Zwischen dem Verlängerungsabschnitt 99 und der Auflagefläche 95 sind zwei einander gegenüber liegende Schenkel 98, 102 vorgesehen, die rechtwinklig zu den Schenkeln 96, 97 angeordnet sind. Zwischen diesen Schenkeln 98, 102 ist eine Öffnung 103 in der Auflagefläche vorgesehen, die von einer Zunge 104 wenigstens teilweise überdeckt wird. Durch Herunterklappen dieser Zunge 104 kann eine Schelle arretiert werden.

Fig. 8b zeigt das Halteelement 94 noch einmal in einer Ansicht von unten. Man erkennt hierbei, dass die Zunge 104 durch Herausstanzen aus der Fläche 95 erzeugt werden kann.

In Fig. 8c ist eine Ansicht des Halteelements 95 dargestellt, die den Blick von den Schenkeln 96, 97 auf die Zunge 104 zeigt.

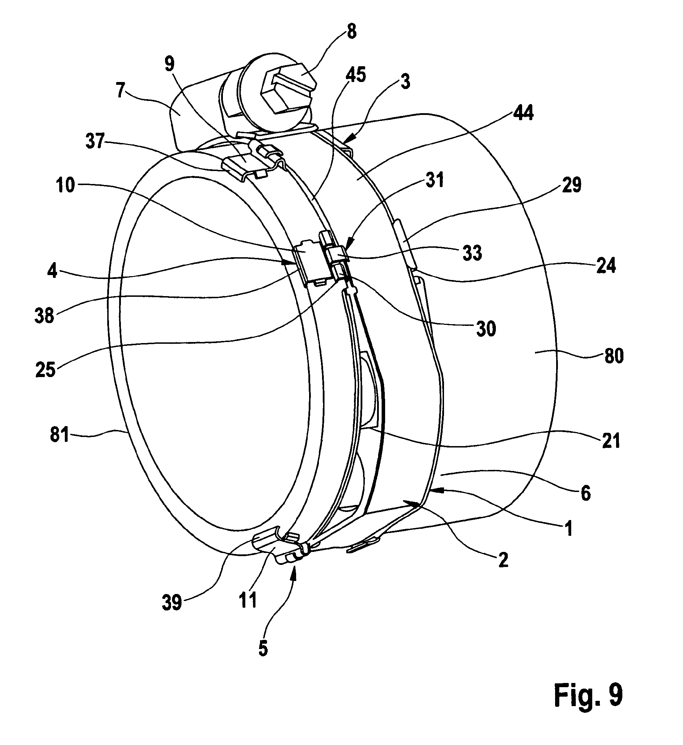

In Fig. 9 ist die Schellenfixierung 1 gemäß Fig. 1 und 2 nach der Montage an einem Schlauch 80 dargestellt. Diese Schellenfixierung 1 ist im Endabschnitt 81 des Schlauchs 80 angeordnet. Zu erkennen sind wiederum die Halteelemente 3 bis 5, die an der Schlauchschelle 2 angeordnet sind. Die Schlauchschelle 2 ist dabei auf den Auflageflächen der Halteelemente 3 bis 5 angeordnet, so dass diese Auflageflächen der Halteelemente 3 bis 5 zwischen dem Schlauch 80 und der Schlauchschelle 2 angeordnet sind.

Bei den in Fig. 9 dargestellten Halteelementen 3 bis 5 handelt es sich jeweils um dieselbe Variante, wie sie in Fig. 3a bis 3c dargestellt ist.

Wie bei dem Halteelement 4 gut zu sehen ist, umgeben die Schenkel 24, 25 die Seitenabschnitte 44, 45 des Bands 6 der Schlauchschelle 2. Das Ende 29 sowie das freie Ende 33 des Einrastelements 31 überdecken dabei die Seitenabschnitte 44, 45 der Schlauchschelle 2 zumindest teilweise.

Zu erkennen sind auch die Verlängerungsabschnitte 9 bis 11 der Halteelemente 3 bis 5. Die an diesen Verlängerungsabschnitten 9 bis 11 angeordneten Eingreifelemente 12 bis 17 sind in Fig. 9 nicht zu sehen, da diese im Endabschnitt 81 des Schlauchs 80 eingebracht sind.

Obwohl in Fig. 9 lediglich Halteelemente 3 bis 5 der gleichen Art verwendet werden, können für eine Schellenfixierung auch unterschiedliche Halteelemente verwendet werden.

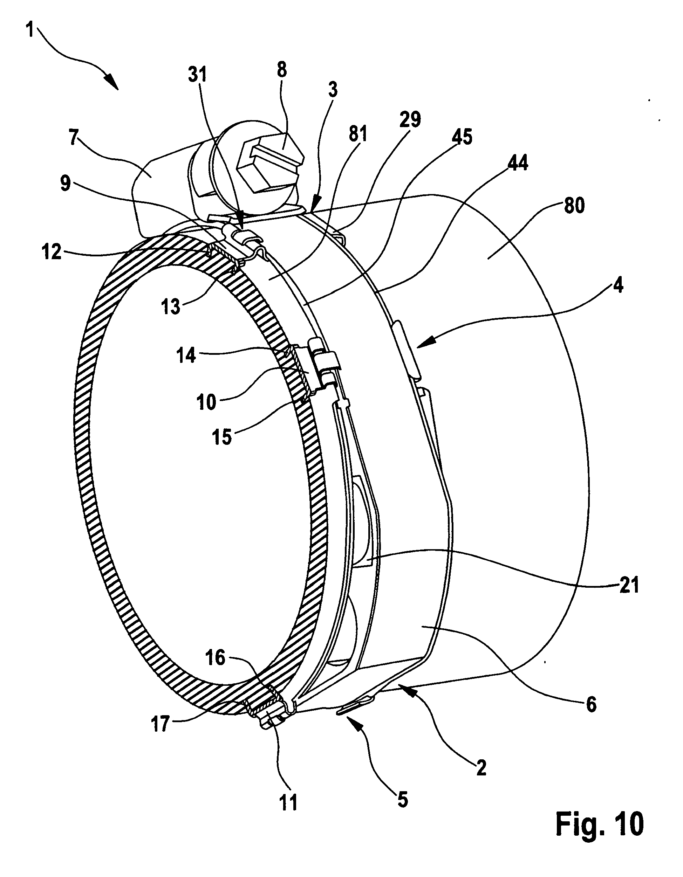

In Fig. 10 sind der Schlauch 80 und die an dem Schlauch 80 angebrachte Schellenfixierung 1 aus Fig. 9 geschnitten gezeigt. Dadurch liegen die an den Verlängerungsabschnitten 9 bis 11 der Halteelemente 3 bis 5 angeordneten Eingreifelemente 12 bis 17 frei. Diese Eingreifelemente 12 bis 17 sind in das Schauchende 81 des Schlauches 80 hineingedrückt. Ein Verrutschen der Schellenfixierung 1 ist nicht mehr möglich.

Soll nun der Schlauch 80 an einen hier nicht dargestellten Rohrstutzen angebracht werden, so kann wie folgt vorgegangen werden:
- Anbringen von mindestens einem Halteelement 3 bis 5 an der Unterseite der Schlauchschelle 2.
- Einführen des Endabschnitts 81 des Schlauchs 80 in die Schellenfixierung 1.
- Anbringen des Schlauches 80 an dem Rohrstutzen durch Überstülpen.
- Suchen der gewünschten Position der Schellenfixierung 1 auf der SchlauchOberfläche.
- Festziehen der Schraube 8 der Schlauchschelle 2, wodurch der Umfang der Schelle 2 verkleinert wird und die Eingreifelemente 12 bis 17 in den Schlauch 80 gedrückt werden.

Damit bilden die Halteelemente 3 bis 5 über die Eingreifelemente 12 bis 17 mit dem Schlauch 80 eine feste Verbindung. Bei Verwendung der Schellenfixierung 1 muss das Schlauchende 81 nicht besonders geformt sein. Somit ist es nicht nötig, dass das Schlauchende 81 eine raue Oberfläche aufweist. Durch die Schellenfixierung 1 mit den Halteelementen 3 bis 5, die die Eingreifelemente 12 bis 17 aufweisen, können auch Schläuche mit einer glatten Oberfläche gewählt werden, da durch die Schellenfixierung der Schlauch fest an dem Stutzen angebracht werden kann.

Vorteilhaft bei dem Anbringen der Schellenfixierung 1 an dem Schlauch 80 ist, dass diese axial sowie radial vorfixiert werden kann. Durch diese Vorfixierung kann die Montagezeit bei dem Anbringen des Schlauchs 80 an dem Rohrstutzen deutlich verkürzt werden. Ein Abrutschen des Schlauchs vom Stutzen ist damit nicht mehr möglich. Somit können Schläuche mit vorfixierten Schellenfixierungen direkt zu dem Ort transportiert werden, wo die Schläuche an Stutzen montiert werden sollen. Die Schläuche können dann vor Ort über die Schellenfixierungen fest an den Stutzen angeordnet werden. Diese Montage erfolgt mit speziell für die Schellenfixierungen vorgesehenen Werkzeugen.

Die radiale Fixierung erfolgt dadurch, dass zum Beispiel ein Halteelement in der Nähe des Gehäuses für die Schraube 8 und/oder in der Nähe der Federn 6, 21 angebracht wird. Wird dann die Schelle etwa relativ zum Schlauch 80 verdreht, stößt das Halteelement gegen die Feder bzw. die Feder gegen das Halteelement, so dass ein weiteres Verdrehen verhindert wird.

Es versteht sich, dass die Teile 37, 25 entfallen können, weil die Eingreifelemente 12, 13 genügend Halt bieten. Die Eingreifelemente 12, 13 können auch länger als in Fig. 10 dargestellt sein und beispielsweise den Schlauch in seiner ganzen Stärke durchstoßen. Eventuell auf der Innenseite des Schlauchs herausragende Teile der Eingreifelemente 12, 13 können dann mit speziellen Vorrichtungen umbördelt werden.

Die vorbeschriebene Schellenfixierung weist folgende Vorteile auf:
- Es ist eine exakte Positionierung der Schelle an dem Schlauch möglich.
- Der Schlauch und der übergestülpte Stutzen können über die Schellenfixierung fest miteinander verbunden werden.
- Die Schellenfixierung ist korrosionsbeständig.
- Die Schellenfixierung ist kompakt aufgebaut; sie kann somit Platz sparend aufbewahrt werden.
- Die Schellenfixierung besteht aus nur wenigen Teilen, die eine Vielzahl von Anwendungen abdecken.
- Ein Schlauch kann mittels der vormontierten Schellenfixierung in sehr kurzer Zeit an einem Stutzen angebracht werden.
- An der Verbindungsstelle zwischen Schlauch und Stutzen treten keine undichten Stellen auf.

Obwohl die Ausführungsbeispiele der Erfindung oben detailliert beschrieben wurden, ist die Erfindung nicht auf diese Ausführungsbeispiele beschränkt. Ein Fachmann versteht, dass die Erfindung verschiedene Varianten mit umfasst, mit denen dasselbe Ergebnis erzielt wird wie mit den hier beschriebenen Ausführungsbeispielen. Es ist deshalb für den Fachmann klar, dass mit den hier beschriebenen Ausführungsbeispielen der Schutzumfang der Ansprüche nicht eingeschränkt wird und dass es weitere Varianten, Modifikationen und Alternativen gibt, die unter den Schutzumfang der Ansprüche fallen.

### Bezugszeichenliste

| | |
|---|---|
| 1 | Schellenfixierung |
| 2 | Schlauchschelle |
| 3 | Halteelement |
| 4 | Halteelement |
| 5 | Halteelement |
| 6 | gekrümmtes Band |
| 7 | Schraubengehäuse |
| 8 | Schraube |
| 9 | Verlängerungsabschnitt |
| 10 | Verlängerungsabschnitt |
| 11 | Verlängerungsabschnitt |
| 12 | Eingreifelement |
| 13 | Eingreifelement |
| 14 | Eingreifelement |
| 15 | Eingreifelement |
| 16 | Eingreifelement |
| 17 | Eingreifelement |
| 18 | Innenseite |
| 19 | Verbindungsstück |
| 20 | Schenkel |
| 21 | Federeinlage |
| 22 | Schenkel |
| 23 | Schenkel |
| 24 | Schenkel |
| 25 | Schenkel |
| 26 | |
| 27 | U-förmiger Abschnitt |
| 28 | Auflagefläche |
| 29 | Ende |
| 30 | Ende |
| 31 | Einrastelement |
| 32 | Abschnitt |
| 33 | freies Ende |
| 34 | Endabschnitt |
| 35 | Pfeil |
| 36 | Pfeil |
| 37 | Ende |
| 38 | Ende |
| 39 | Ende |
| 40 | Innenseite |
| 41 | Seitenrand |
| 42 | Seitenrand |
| 43 | Oberseite |
| 44 | Erhebung |
| 45 | Erhebung |
| 46 | Element |
| 47 | Halteelement |
| 48 | U-förmiger Abschnitt |
| 49 | Auflagefläche |
| 50 | Schenkel |
| 51 | Schenkel |
| 52 | Ende |
| 53 | Ende |
| 54 | Verlängerungsabschnitt |
| 55 | Eingreifelement |
| 56 | Eingreifelement |
| 57 | Halteelement |
| 58 | U-förmiger Abschnitt |
| 59 | Schenkel |
| 60 | Schenkel |
| 61 | Auflagefläche |
| 62 | Ende |
| 63 | Ende |
| 64 | Verlängerungsabschnitt |
| 65 | Eingreifelement |
| 66 | Eingreifelement |
| 67 | Flügel |
| 68 | Flügel |
| 69 | Flügel |
| 70 | Halteelement |
| 71 | U-förmiger Abschnitt |
| 72 | Auflagefläche |
| 73 | Schenkel |
| 74 | Ende |
| 75 | Verlängerungsabschnitt |
| 76 | Element |
| 77 | Ende |
| 78 | Eingreifelement |
| 79 | Eingreifelement |
| 80 | Schlauch |
| 81 | Endabschnitt |
| 82 | Halteelement |
| 83 | Schenkel |
| 84 | Schenkel |
| 85 | Auflagefläche |
| 86 | U-förmiger Abschnitt |
| 87 | Verlängerungsabschnitt |
| 88 | Eingreifelement |
| 89 | Eingreifelement |
| 90 | Nase |
| 91 | Nase |
| 92 | Pfeil |
| 93 | Pfeil |
| 94 | Halteelement |
| 95 | Auflagefläche |
| 96 | Schenkel |
| 97 | Schenkel |
| 98 | Schenkel |
| 99 | Verlängerungsabschnitt |
| 100 | Eingreifelement |
| 101 | Eingreifelement |
| 102 | Schenkel |
| 103 | Öffnung |
| 104 | Zunge |

## Patentansprüche

1. Schellenfixierung (1) für ein Schlauchende mit
a) einem Halteelement (94), das zwei Schmalseiten und zwei Breitseiten aufweist, wobei die Oberseite des Halteelements (94) als Auflagefläche (95) für eine Schlauchschelle (2) dient und wobei das Halteelement vier Schenkel (96, 97, 98, 102) zum Umfassen der Schlauchschelle (2) aufweist und
b) wobei das Halteelement (94) mindestens ein Eingreifelement (100, 101) aufweist,
das in das Schlauchende eingreifen kann,
**dadurch gekennzeichnet**,
c) dass zwei Schenkel (96, 97) der vier Schenkel (96, 97, 98, 102) entlang der ersten Schmalseite des Halteelements (94) und die beiden anderen Schenkel (98, 102) der vier Schenkel (96, 97, 98,102) jeweils entlang einer der beiden Breitseiten des Halteelements (94) einander gegenüber liegend angeordnet sind, so dass die zwei entlang der ersten Schmalseite angeordneten Schenkel (96, 97) zu den beiden anderen Schenkeln (98, 102) senkrecht ausgerichtet sind, und dass
d) das mindestens eine Eingreifelement (100, 101) an einem Verlängerungsabschnitt (99) vorgesehen ist, der die zweite Schmalseite des Halteelements (94) verlängert.

2. Schellenfixierung nach Anspruch 1, **dadurch gekennzeichnet, dass** zumindest einer der Schenkel (96, 97) ein Ende aufweist, das im Wesentlichen parallel zur Auflagefläche (95) des Halteelements (94) angeordnet ist und die Auflagefläche (95) zumindest teilweise überdeckt.

3. Schellenfixierung nach Anspruch 2 **dadurch gekennzeichnet, dass** die Schlauchschette (2) mit ihrer Innenseite (40) auf der Auflagefläche (95) des Halteelements (94) auflegbar ist und dass die Enden der Schenkel die Oberseite (43) der Schlauchschelle (2) zumindest teilweise umgeben können.

4. Schellenfixierung nach Anspruch 1, **dadurch gekennzeichnet, dass** die Eingreifelemente (100, 101) in Bezug auf die Schenkel (96, 97) in entgegengesetzter Richtung ausgerichtet sind, wodurch die Eingreifelemente (100,101) in den Schlauch (80) eindringen können.

5. Schellenfixierung nach Anspruch 1, **dadurch gekennzeichnet, dass** der Verlängerungsabschnitt (99) ein im Wesentlichen parallel zu den Eingreifelementen (100, 101) und in Bezug auf die Schenkel (96, 97) in entgegengesetzter Richtung verlaufendes Ende aufweist, das das Ende des Schlauchs (80) zumindest teilweise umgeben Kann.

6. Schellenfixierung nach Anspruch 4, **dadurch gekennzeichnet, dass** die Eingreifelemente (100, 101) spitze oder scharfe Enden aufweisen.

7. Schellenfixierung nach Anspruch 2, **dadurch gekennzeichnet, dass** das Ende des Schenkels die Auflagefläche (95) vollständig überdeckt.

8. Schellenfixierung nach Anspruch 7, **dadurch gekennzeichnet, dass** das Ende des Schenkels einen Endabschnitt aufweist, der in Richtung der Auflagefläche (95) gebogen ist.

9. Schellenfixierung nach Anspruch 1, **dadurch gekennzeichnet, dass** zwischen zwei Schenkeln (98, 102) eine Öffnung (103) in der Auflagefläche (95) vorgesehen ist, wobei die Öffnung (103) durch eine Zunge (104) wenigstens teilweise überdeckt wird.

## Claims

1. Clip fixing means (1) for a hose end, having
a) a retaining element (94), which has two narrow sides and two broad sides, wherein the upper side of the retaining element (94) serves as a bearing surface (95) for a hose clip (2), and wherein the retaining element has four limbs (96, 97, 98, 102) for enclosing the hose clip (2), and
b) wherein the retaining element (94) has at least one engagement element (100, 101), which can engage in the hose end,
characterized
c) in that two limbs (96, 97) of the four limbs (96, 97, 98, 102) are arranged along the first narrow side of the retaining element (94) and the other two limbs (98, 102) of the four limbs (96, 97, 98, 102) are arranged opposite to each other, each along one of the two broad sides of the retaining element (94), so that the two limbs (96, 97) arranged along the first narrow side are oriented perpendicularly to the other two limbs (98, 102), and in that
d) the at least one engagement element (100, 101) is provided on an extension portion (99), which extends the second narrow side of the retaining element (94).

2. Clip fixing means according to Claim 1, **characterized in that** at least one of the limbs (96, 97) has an end which is arranged essentially parallel to the bearing surface (95) of the retaining element (94) and at least partially covers over the bearing surface (95).

3. Clip fixing means according to Claim 2, **characterized in that** the hose clip (2) with its inner side (40) seats on the bearing surface (95) of the retaining element (94), and **in that** the ends of the limbs at least partially surround the upper side (43) of the hose clip (2).

4. Clip fixing means according to Claim 1, **characterized in that** the engagement elements (100, 101) are oriented in the opposite direction to the limbs (96, 97), as a result of which the engagement elements (100, 101) can penetrate into the hose (80).

5. Clip fixing means according to Claim 1, **characterized in that** the extension portion (99) has an end which runs essentially parallel to the engagement elements (100, 101) and in the opposite direction to the limbs (96, 97) and at least partially surrounds the end of the hose (80).

6. Clip fixing means according to Claim 4, **characterized in that** the engagement elements (100, 101) have pointed or sharp ends.

7. Clip fixing means according to Claim 2, **characterized in that** the end of the limb fully covers over the bearing surface (95).

8. Clip fixing means according to Claim 7, **characterized in that** the end of the limb has an end portion which is bent in the direction of the bearing surface (95).

9. Clip fixing means according to Claim 1, **characterized in that** an opening (103) is provided in the bearing surface (95) between two limbs (98, 102), wherein the opening (103) is at least partially covered over by a tongue (104).

## Revendications

1. Fixation d'un collier de serrage (1) pour une extrémité de tuyau souple, comprenant
a) un élément de retenue (94) qui comprend deux côtés étroits et deux côtés larges, la face supérieure de l'élément de retenue (94) servant de surface d'appui (95) pour un collier de serrage de tuyau souple (2) et l'élément de retenue comprenant quatre branches (96, 97, 98, 102) pour enserrer le collier de serrage de tuyau souple (2) et
b) l'élément de retenue (94) comprenant au moins un élément d'engagement (100, 101) qui peut s'engager dans l'extrémité de tuyau souple,
**caractérisée en ce que**
c) deux branches (96, 97) parmi les quatre branches (96, 97, 98, 102) sont disposées en regard l'une de l'autre le long du premier côté étroit de l'élément de retenue (94) et les deux autres branches (98, 102) parmi les quatre branches (96, 97, 98, 102) sont respectivement disposées en regard l'une de l'autre le long de l'un des deux côtés larges de l'élément de retenue (94), de telle sorte que les deux branches (96, 97) disposées le long du premier côté étroit soient orientées perpendiculairement aux deux autres branches (98, 102), et **en ce que**
d) l'au moins un élément d'engagement (100, 101) est prévu sur une section de prolongement (99) qui prolonge le deuxième côté étroit de l'élément de retenue (94).

2. Fixation d'un collier de serrage selon la revendication 1, **caractérisée en ce qu'**au moins l'une des branches (96, 97) comprend une extrémité qui est disposée essentiellement parallèlement à la surface d'appui (95) de l'élément de retenue (94) et recouvre au moins partiellement la surface d'appui (95).

3. Fixation d'un collier de serrage selon la revendication 2, **caractérisée en ce que** le collier de serrage de tuyau souple (2) peut être appliqué, par sa face intérieure (40), sur la surface d'appui (95) de l'élément de retenue (94), et **en ce que** les extrémités des branches peuvent entourer au moins partiellement la face supérieure (43) du collier de serrage de tuyau souple (2).

4. Fixation d'un collier de serrage selon la revendication 1, **caractérisée en ce que** les éléments d'engagement (100, 101) sont orientés en sens inverse par rapport aux branches (96, 97), de sorte que les éléments d'engagement (100, 101) puissent pénétrer dans le tuyau souple (80).

5. Fixation d'un collier de serrage selon la revendication 1, **caractérisée en ce que** la section de prolongement (99) comprend une extrémité s'étendant essentiellement parallèlement aux éléments d'engagement (100, 101) et s'étendant en sens inverse par rapport aux branches (96, 97), laquelle extrémité peut entourer au moins partiellement l'extrémité du tuyau souple (80).

6. Fixation d'un collier de serrage selon la revendication 4, **caractérisée en ce que** les éléments d'engagement (100, 101) comprennent des extrémités effilées ou pointues.

7. Fixation d'un collier de serrage selon la revendication 2, **caractérisée en ce que** l'extrémité de la branche recouvre complètement la surface d'appui (95).

8. Fixation d'un collier de serrage selon la revendication 7, **caractérisée en ce que** l'extrémité de la branche comprend une section d'extrémité qui est courbée en direction de la surface d'appui (95).

9. Fixation d'un collier de serrage selon la revendication 1, **caractérisée en ce qu'**une ouverture (103) est prévue dans la surface d'appui (95) entre deux branches (98, 102), l'ouverture (103) étant recouverte au moins partiellement par une languette (104).
